# EUROPÄISCHE PATENTSCHRIFT

(11) **EP 1 521 973 B1**
(45) Veröffentlichungstag und Bekanntmachung des Hinweises auf die Patenterteilung: **25.07.2007**
(21) Anmeldenummer: 03760655.5
(22) Anmeldetag: 18.06.2003
(51) Int. Cl.: G01R 31/28

(54) **ANSTEUERVORRICHTUNG EINES OPTOELEKTRONISCHEN GERÄTES MIT VERBESSERTEN TESTEIGENSCHAFTEN**
CONTROL DEVICE OF AN OPTOELECTRONIC DEVICE HAVING IMPROVED TESTING PROPERTIES
DISPOSITIF DE COMMANDE PRESENTANT DE MEILLEURES PROPRIETES D'ESSAI

(30) Priorität: 19.06.2002 DE 10227332
(43) Veröffentlichungstag der Anmeldung: 13.04.2005
(73) Patentinhaber: AKT Electron Beam Technology GMBH, 85622 Feldkirchen (DE)
(72) Erfinder: BRUNNER, Matthias, 85551 Kirchheim-Heimstetten (DE)
(74) Vertreter: Zimmermann, Gerd Heinrich
(86) Internationale Anmeldenummer: PCT/EP2003/006481
(87) Internationale Veröffentlichungsnummer: WO 2004/001706

(56) Entgegenhaltungen:
- EP-A- 0 806 700
- WO-A-98/31050
- US-A- 5 657 139
- US-A- 5 774 100
- US-A- 5 930 607
- US-B1- 6 265 889
- US-B1- 6 320 568
- US-B1- 6 337 722
- US-B1- 6 340 963
- US-B1- 6 380 729

## Beschreibung

Die vorliegende Erfindung bezieht sich auf das Testen eines optoelektronischen Gerätes und auf ein für das Testen modifiziertes optoelektronisches Gerät. Das optoelektronische Gerät hat dabei insbesondere die Gestalt eines Anzeigeelements mit Bildpunkten. Im speziellen bezieht sich die vorliegende Erfindung auf eine Ansteuerelektronik für die Ansteuerung eines optoelektronischen Gerätes, eine Anordnung von Test-Kontaktflächen und auf ein Verfahren zum Testen eines optoelektronischen Gerätes, insbesondere in Form eines Displays mit Bildpunkten.

Mit steigender Nachfrage für Bildschirmelemente ohne Bildröhre wachsen die Anforderungen für Flüssigkristallanzeigen (LCD) und anderen Anzeigeelemente, bei denen Schaltelemente wie zum Beispiel Dünnfilmtransistoren (TFT) verwendet werden. Bei diesen Anzeigeelementen sind die Bildpunkte, die so genannten Pixel, matrixförmig angeordnet.

Die Schaltelemente jedes Pixels werden in der Regel über Steuerleitungen, d.h. Gateleitungen und Datenleitungen angesteuert. Um eine Aufladung der Bildelemente zu verhindern, können die Steuerleitungen während der Produktion mit Kurzschlussbalken kurzgeschlossen werden. Andernfalls könnte eine Aufladung der Bildelemente zur Zerstörung der Schaltelemente bzw. der zugehörigen Pixel führen.

Darüber hinaus gibt es Entwicklungen dahingehend, dass - neben den Bildelementen - direkt auf das Glassubstrat periphere Treiberschaltkreise aufgebracht werden. Dadurch wird die externe Ansteuerung der Anzeigeelemente vereinfacht. Eine solche Anzeigevorrichtung mit integrierten Treiberschaltkreisen ist in der Druckschrift DE 198 32 297 vorgestellt. In diesem Fall kann die Zahl der für die Bildsteuerung benötigten Kontaktflächen reduziert werden. Ohne solche Treiberschaltkreise muss jede Steuerleitungen eine kontaktierbare Fläche besitzen, um im Betrieb die Bildsteuerung zu ermöglichen. Die durch eine externe Steuerung kontaktierbaren Flächen werden auch als Pad bezeichnet.

Um eine gute Bildqualität der Anzeigeelemente zu gewährleisten, dürfen nur sehr wenige der zum Beispiel mehrere Millionen Pixel defekt sein. Um eine kostengünstige Produktion zu gewährleisten, ist es daher vor allem für die immer größer werdenden Anzeigeelemente wichtig, leistungsfähige Online-Testverfahren zur Verfügung zustellen. Ein solches Testverfahren ist zum Beispiel in der Druckschrift EP 0 523 584 offenbart. Bei diesen Testverfahren werden die einzelnen Bildpunkte mit einem Korpuskularstrahl getestet. Der Korpuskularstrahl kann entweder dazu verwendet werden, die über die Zuleitungen aufgebrachte Ladung zu detektieren und/oder Ladung auf eine Pixel-Elektrode aufzubringen.

Druckschrift US 5,081,687 (Henley et al.) zeigt eine Methode und eine Vorrichtungen zum Testen von LCD-Displays. Dabei ist jeweils jede zweite Datenleitung und jede zweite Gateleitungen mit einem Kurzschlussbalken verbunden. Ein Testbild wird über die Ansteuerung der Kurzschlussbalken erzeugt. Beim Testen wird als Testbild an den Elektroden jedes zweiten Pixels zum Beispiel eine Spannung von - 5V und an den Elektroden der dazwischenliegenden Pixel eine Spannung von +5 V angelegt. Derartige Kurzschlussbalken können jedoch nicht problemlos zusammen mit integrierten Treiberschaltkreisen vorgesehen werden, denn sie schließen die Treiberausgänge kurz.

Druckschrift US 5,936,687 (Lee et al.), in der ein Treiberschaltkreis verwendet wird, nutzt zur Erzeugung eines Testbilds Kontaktflächen, welche mit einer Schaltung zur Vermeidung elektrostatischer Entladungen (ESD) verbunden sind. Diese Schaltung beinhaltet Kurzschlussbalken, die über Dioden mit den Leitungen zu Ansteuerung der einzelnen Bildelemente verbunden sind. In Druckschrift US 6,337,772 (Ha et al.) werden für die Verbindung der Kurzschlussbalken zu den Steuerleitungen Transistoren verwendet.

Werden Testbilder über die Kurzschlussbalken in Verbindung mit einer Treiberschaltung erzeugt, müssen folgende Vorraussetzungen für die Durchführung eines Tests erfüllt sein. Entweder sind die Treiberschaltungen zum Zeitpunkt des Tests noch nicht integriert, oder die Ausgänge der integrierten Schaltung sind so ausgebildet, dass sie die Testsignale nicht störend beeinflussen. Diese Voraussetzung lässt sich jedoch in den seltensten Fällen verwirklichen.

Darüber hinaus muss folgendes berücksichtigt werden. Kurzschlussbalken lassen sich aus Prozess-, Platz-, oder schaltungstechnischen Gründen nicht immer realisieren. Außerdem wird die Funktion der Treiberschaltkreise mit dieser Lösung nicht getestet. Weiterhin können nur einfache Testmuster erzeugt werden, deren periodisch wiederholte Elementarzelle nicht größer sein kann als die Zahl der Kurzschlußbalken.

Zum Beispiel beschreibt EP-A-0 806 700, eine LCD Gerät für ein optoelektronisches Gerät. Das LCD Gerät enthält eine Vielzahl von LCD Zellen, wobei Datensignale durch ein Vielzahl von Feldeffekttransistoren an die LCD Zellen übertragen werden. Die Feldeffekttransistoren sind in einer Vielzahl von Bildelementen angeordnet. Das LCD Gerät enthält ein Substrat mit einer Pixelregion und zumindest einer Treiberregion, eine Vielzahl von ersten Leitungen und eine Vielzahl von zweiten Leitungen, die als Matrix in der Pixelregion angeordnet sind und mit den Feldeffekttransistoren verbunden sind, in der zumindest einen Treiberregion ausgebildete und mit zumindest einer der ersten Leitungen oder zweiten Leitungen verbundenen Treiberschaltungen, Ausgangsanschlüsse der Treiberschaltungen, die mit einer der Vielzahl von ersten und zweiten Leitungen verbunden sind, und zumindest eine Treibertestschaltung mit Transistoren, wobei die Transistoren der zumindest einen Treibertestschaltung mit einem Testsignaleingangsanschluss, einem Testsignalausgangsanschluss und einer der ersten und zweiten Leitungen gekoppelt sind, wobei die an die Testsignaleingangsanschlüsse angelegten Testsignale an den Testsignalausgangsanschluss durch die Transistoren gemäß der Bedienung der Treiberschaltung ausgegeben werden.

Verwendet man für die Erzeugung eines Testbilds die auch im Rahmen des normalen Betriebs verwendeten Pads, so muss vor allem für große Anzeigeelemente eine Vielzahl von Kontaktflächen während des Testens kontaktiert werden. Dies ist vor allem dann schwierig, wenn große Anzeigeelemente getestet werden, da hierbei das Anzeigeelement während des Testverfahrens verschoben werden muss. Kleinere Displays werden in einer Vielzahl auf dem Glas angeordnet, so daß auch in diesem Fall die Glasplatte während des Testvorganges wiederholt verschoben werden muß, um alle Displays zu testen. Dadurch werden die Anforderungen erhöht, die an den Kontaktierblock gestellt werden. Der Kontaktierblock dient zur externen Signaleingabe auf die Kontaktflächen des Treiberschaltkreises oder die Kontaktflächen der Datenleitungen und Gateleitungen bzw. der zugehörigen Kurzschlussbalken.

Die obenstehenden Probleme des Standes der Technik werden gelöst durch erfindungsgemäße Vorrichtungen nach den Ansprüchen 1, und 13 sowie den erfindungsgemäßen Verfahren nach den Ansprüchen 15 und 21.

Die Aufgabe wird gemäß einem Aspekt der Erfindung durch eine Ansteuerelektronik für die Ansteuerung eines optoelektronischen Gerätes mit einer Matrix von Bildelementen gelöst. Die Ansteuerelektronik weist eine Treiberschaltung mit Eingängen und Ausgängen auf. Ferner enthält die Ansteuerelektronik eine erste Anordnung von Kontaktflächen, die mit der Treiberschaltung verbunden sind und eine zweite Anordnung von Kontaktflächen, die mit der Treiberschaltung verbunden sind. Bevorzugt sind beide Anordnungen von Kontaktflächen mit den Eingängen der Treiberschaltung verbunden.

Weiterhin bevorzugt weisen die erste Anordnung von Kontaktflächen erste Kontaktflächen auf und die zweiten Anordnung von Kontaktflächen weisen zweite Kontaktflächen auf. Bevorzugt sind die zweiten Kontaktflächen der zweiten Anordnung von Kontaktflächen größer als die ersten Kontaktflächen der ersten Anordnung von Kontaktflächen.

Durch die vorliegende Erfindung kann ein für Testzwecke hinreichend komplexes Testmuster über die zweite Anordnung von Kontaktflächen erzeugt werden. Für Testzwecke müssen keine beliebigen Bilder erzeugt werden, sondern im Vergleich zum normalen Betrieb weniger komplexe Muster. Daher kann die Anzahl der Kontaktflächen für die Erzeugung eines Testmusters im Vergleich zur der Anzahl der Kontaktflächen für die Erzeugung eines beliebigen Bildes im normalen Betrieb reduziert werden. Diese Reduktion der Anzahl der Kontaktflächen führt dazu, dass die Kontaktflächen vergrößert werden können. Daher ist es möglich, Anzeigeelemente sicherer, schneller und effektiver zu testen.

Die Ansteuerelektronik ist bevorzugt so gestaltet, dass die Anzahl der Eingänge der Treiberschaltung, mittels derer die Anordnung von Kontaktflächen zum Testen mit der Treiberschaltung verbunden ist, maximal 5 %, bevorzugt maximal 1 %, besonders bevorzugt maximal 0.5 % der Anzahl der Ausgänge der Treiberschaltung beträgt, mittels derer die Steuerleitungen zu den Bildelementen der Bildschirm-Matrix mit der Treiberschaltung verbunden sind.

Die Aufgabe der Erfindung wird gemäß einem weiteren Aspekt der Erfindung durch eine Anordnung von Testkontaktflächen zur Versorgung eines optoelektronischen Gerätes mit Signalen für die Erzeugung eines Testmusters gelöst. Das optoelektronische Gerät enthält eine Matrix von Bildelementen. Diese Anordnung weist auf: mindestens ein Pad, d.h. mindestens eine Anschlussfläche, und mindestens eine Verbindung des mindestens einen Pads zu einer Treiberschaltung, wobei die Treiberschaltung im normalen Betrieb über eine Anordnung von Betriebskontaktflächen mit Signalen versorgt wird.

Gemäß einem weiteren Aspekt der vorliegenden Erfindung wird die Aufgabe gelöst durch ein optoelektronisches Gerät mit einer Matrix von Bildelementen, mindestens einer Treiberschaltung, einer ersten Anordnung von Kontaktflächen, die mit der Treiberschaltung verbunden sind, und einer zweiten Anordnung von Kontaktflächen, die mit der Treiberschaltung verbunden sind.

Ein weiterer Aspekt zur Lösung der erfindungsgemäßen Aufgabe ist das Verfahren zum Testen eines optoelektronischen Gerätes mit den Schritten: Herstellen eines Kontakts zwischen einer externen Steuerung und einer Anordnung von Testkontaktflächen, Versorgen eines Eingangs einer Treiberschaltung über die Anordnung von Testkontaktflächen mit Eingangssignalen, um ein Testmuster auf einer Matrix von Bildelementen zu erzeugen und Testen der Bildelemente der Matrix von Bildelementen.

Ein weiterer Aspekt zur Lösung der Aufgabe der vorliegenden Erfindung bezieht sich auf ein Verfahren zum Herstellen einer Ansteuerelektronik eines optoelektronischen Gerätes mit einer Matrix von Bildelementen. Dabei werden folgenden Schritte durchgeführt: eine Treiberschaltung wird auf einem Substrat zur Verfügung gestellt, Steuerleitungen der Matrix von Bildelementen werden mit Ausgängen der Treiberschaltung verbunden, eine erste Anordnung von Kontaktflächen wird auf dem Substrat zur Verfügung gestellt, die erste Anordnung von Kontaktflächen wird mit Eingängen der Treiberschaltung verbunden, eine zweite Anordnung von Kontaktflächen wird auf dem Substrat zur Verfügung gestellt und die zweite Anordnung von Kontaktflächen wird mit Eingängen der Treiberschaltung verbunden.

Bevorzugte Ausführungen und besondere Aspekte der Erfindung ergeben sich aus den Unteransprüchen.

Ausführungsbeispiele der Erfindung sind in den Figuren dargestellt, und werden im folgenden exemplarisch näher beschrieben.

Es zeigen:
- Fig. 1a: zeigt eine schematische Darstellung einer Ausführungsform der vorliegenden Erfindung;
- Fig. 1b: zeigt einen Ausschnitt der in Figur 1 dargestellten Ausführungsform der vorliegenden Erfindung;
- Fig. 1c: zeigt eine Alternative des Abschnitts, der in Figur 2 dargestellt ist;
- Fig. 2: zeigt eine schematische Darstellung einer zweiten Ausführungsform der vorliegenden Erfindung;
- Fig. 3: zeigt eine schematische Darstellung einer weiteren Ausführungsform der vorliegenden Erfindung;
- Fig. 3b: zeigt einen Ausschnitt der in Figur 3 dargestellten Ausführungsform der vorliegenden Erfindung;
- Fig. 4: zeigt ein Schema einer Pixeldarstellung eines Testmusters; und
- Fig. 5: zeigt eine schematische Darstellung eines Bildschirmelementes gemäß dem Stand der Technik.

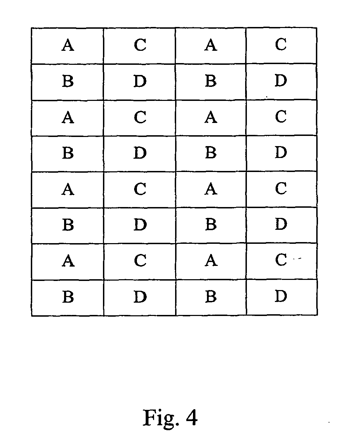

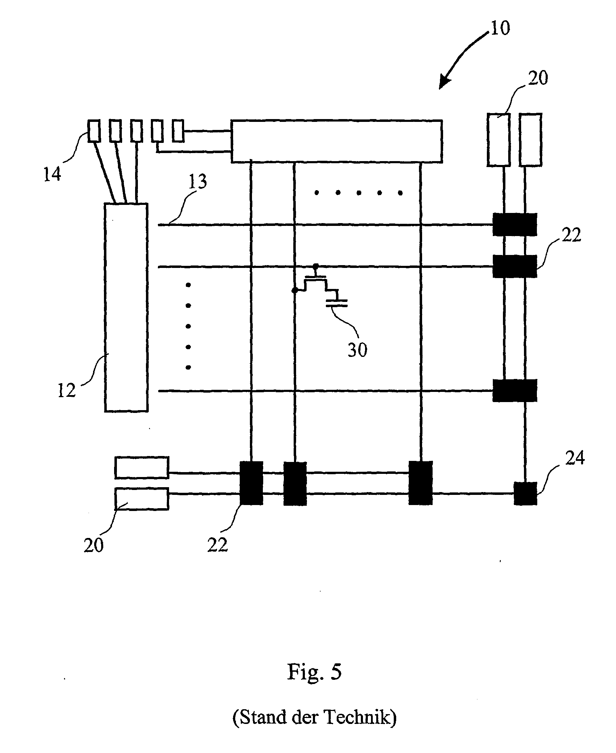

Figur 5 zeigt eine Ausführungsform gemäß dem Stand der Technik. Dargestellt ist eine schematische Übersicht eines Anzeigeelementes 10. Die einzelnen Bildpunkte (Pixel) 30 sind über die Steuerleitungen 13 für die Ansteuerung der Pixel mit den Treiberschaltungen 12 verbunden. Im normalen Betrieb werden die Treiberschaltungen extern über die Kontaktflächen 14 mit Signalen versorgt. In Figur 4 sind symbolisch lediglich fünf Kontaktflächen 14 dargestellt. Für große Anzeigeelemente können jedoch mehrere hundert dieser Kontaktflächen benötigt werden, um die Treiberschaltungen mit Signalen zu versorgen.

Die Steuerleitungen 13 sind über Schaltelemente 22 mit einer Kurzschlussschaltung verbunden. Diese Kurzschlussschaltung gegen elektrostatische Entladungen (ESD) schützt entweder nur gegen Überspannungen und erlaubt das Anlegen normaler Betriebsspannungen oder kann mittels der Kontaktflächen 20 während des Testens und während des regulären Betriebs abgeschaltet werden. Die Kurzschlussschaltungen für die Datenleitungen und die Gateleitungen werden über die Kopplungsschaltungen 24 miteinander verbunden. Sämtliche oben beschriebene Elemente sind auf dem Glas Substrat integriert.

Diese bekannte Ausführungsform weist folgende Nachteile auf. Ein Testmuster für ein Online-Testverfahren wird über die Kontaktflächen 14 der Treiberschaltungen erzeugt. Da diese Kontaktflächen durch deren Anzahl bedingt sehr klein sind, ist eine Kontaktierung während des Testvorganges schwierig. Das gilt vor allem für Anzeigeelemente, die so groß sind, dass eine mechanische Verschiebung während des Testverfahrens vorgenommen werden muss. Eine solche Verschiebung kann notwendig sein, wenn zum Beispiel eine Ablenkung eines Korpuskularstrahls nicht ausreicht, um das ganze Display zu testen. Für eine große Anzahl von Kontaktflächen mit einer Größe von z.B. unter 80 µm müssen hoch entwickelte Kontaktierungstechnologien verwendet werden, um Fehlprüfungen durch eine fehlerhafte Kontaktierung zu vermeiden. Die technischen Anforderungen werden noch größer, wenn es auf Grund der Größe des Displays notwendig ist, dieses während des Testens zu verschieben.

Für wirtschaftliches Testen sollen ferner hohe Geschwindigkeiten realisiert werden. Darüber hinaus werden durch das Testverfahren zusätzliche Anforderungen an die Kontaktierungsmechanik gestellt. Zieht man dies in Betracht wird schnell ersichtlich, dass die Anforderungen durch den derzeitigen Stand der Technik nicht erfüllt werden können. Weitere Anforderungen an die Kontaktierungsmechanik zum Beispiel für das Testen mit einem Korpuskularstrahl sind: eine Verwendung unter Vakuum, eine geringe Erzeugung von Magnetfeldern, um einen Elektronenstrahl oder das Messsignal nicht zu stören, und ein freier Zugang für den Korpuskularstrahl auf den Bereich der Pixelmatrix.

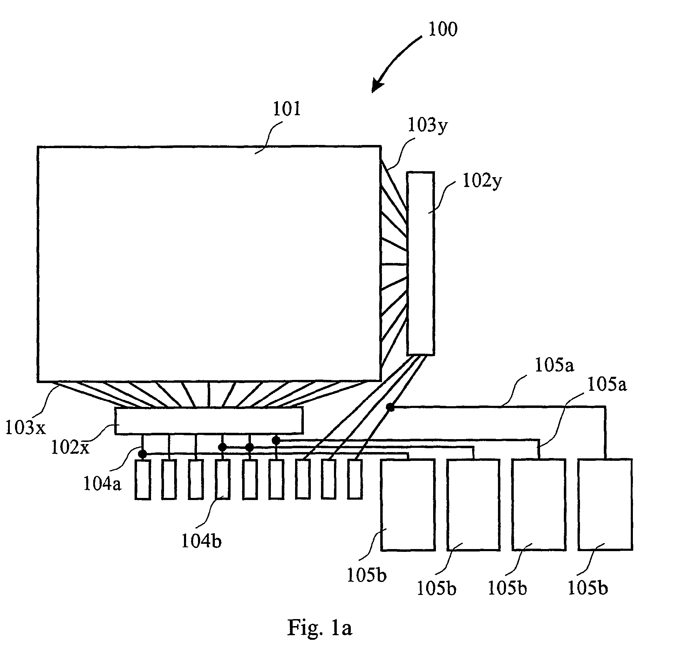

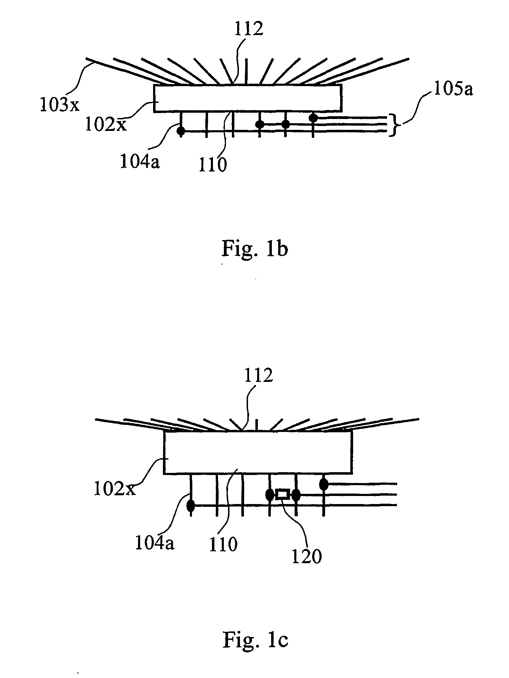

Bevorzugte Aspekte und Ausführungsformen der vorliegenden Erfindung werden im folgenden anhand der Figuren 1 bis 4 beschrieben.

Fig. 1a zeigt ein Anzeigeelement 100 wie zum Beispiel ein Display für ein Mobiltelefon, einen PC oder ein Fernsehgerät. Die Bildpunkte der Pixelmatrix 101 sind matrixförmig angeordnet. Zur Bilderzeugung werden die Bildpunkte über die Steuerleitungen 103x bzw. 103y angesteuert. Um die externe Ansteuerung zur Bilderzeugung zu vereinfachen, sind auf dem Substrat zusätzlich die Treiberschaltungen 102x bzw. 102y vorhanden. Wie auch die Pixelmatrix 101 werden die Treiberschaltungen während der Herstellung auf das Substrat aufgebracht. Die Treiberschaltungen werden von einer externen Ansteuerung über die Pads 104b mit Signalen versorgt. Dabei werden die Signale über die Zuleitungen 104a an die Treiberschaltungen übertragen. Die Pads 104b und die Zuleitungen 104a bilden zusammen die kontaktierbaren Flächen. Diese sind im folgenden auch als Kontaktflächen bezeichnet.

In der Praxis existieren vor allem für große Displays mit vielen Bildpunkten bis zu über hundert dieser Kontaktflächen (104a und 104b). Daher können diese Kontaktflächen auf dem begrenzten zur Verfügung stehenden Raum nicht ausreichend groß gestaltet werden, um effizientes und sicheres Testen zu gewährleisten. Diese Kontaktflächen gemäß dem Stand der Technik haben zum Beispiel für ein Display mit einer Größe von 4 Zoll (640 x 480 Pixel) eine Größe von ca. 60 µm auf 2000 µm. Beim Testen des Anzeigeelementes bzw. der einzelnen Bildpunkte der Pixelmatrix mit zum Beispiel einem Elektronenstrahl müssen folgende Kriterien erfüllt sein. Zunächst muss über eine externe Ansteuerung ein Testmuster erzeugt werden. Die Kontaktierung der Pads 104b muss sicher und zuverlässig erfolgen. Auf Grund der Größe des Anzeigeelementes kann es notwendig sein, das Display unter dem Elektronenstrahl zu bewegen. Um ein schnelles Testverfahren zu ermöglichen muss entweder die Kontaktierung mit der Bewegung beim Testen kontinuierlich mitgeführt werden, oder sie muß möglichst schnell und sicher gelöst und wieder hergestellt werden. Zudem muss der Kontaktierblock, der die Kontaktierung bewerkstelligt, unter Vakuumsbedingungen funktionsfähig sein und darf einen Elektronenstrahl bzw. die zu detektierenden Elektronen nicht durch elektromagnetische Felder stören. Darüber hinaus darf die Pixelmatrix 101 nicht durch die Kontaktierungsmechanik abgedeckt werden, da sonst eine Prüfungen mit einem Elektronenstrahl nicht mehr möglich ist.

Eine fehlerfreie und effiziente Kontaktierung ist unter diesen Randbedingungen schwer oder gar unmöglich. Daher werden erfindungsgemäß zusätzliche Kontaktflächen zum Testen bereitgestellt. Diese bestehen aus den Pads 105b und den damit verbundenen Zuleitungen 105a. Da für ein Testverfahren keine beliebigen Bilder - sondern nur ausreichend komplexe Muster - auf dem Display erzeugt werden müssen, kann die Zahl dieser Test-Kontaktflächen im Vergleich zu der Zahl der für den regulären Betrieb verwendeten Kontaktflächen reduziert werden. Die Anzahl der Test-Kontaktflächen (105a und 105b) kann dabei im Vergleich zur Anzahl der Betriebskontaktflächen auf maximal 90 % bevorzugt auf maximal 50 % besonders bevorzugt auf maximal 20 % reduziert werden. Auf diese Weise werden zum Beispiel für ein großes Display neben den ca. 200 Kontaktflächen für den normalen Betrieb ca. weitere 30 Kontaktflächen für das Testverfahren zur Verfügung gestellt. Wohingegen für ein kleineres Display mit ca. 30 Kontaktflächen für den normalen Betrieb ca. weitere 5 Test-Kontaktflächen bereitgestellt werden.

Daraus ergibt sich, dass die Anzahl der Eingänge der Treiberschaltung 102x, mittels derer die Treiberschaltung mit der zweiten Anordnung von Kontaktflächen 105 verbunden ist, maximal 5 % der Anzahl der Ausgänge der Treiberschaltung beträgt, mittels derer die Treiberschaltung mit den Steuerleitungen 103x der Matrix von Bildelementen 101 verbunden ist. Das bedeutet: Gemäß den Stand der Technik werden die während des Testen verwendeten Pads über Steuerleitungen mit den Ausgängen einer eventuellen Treiberschaltung verbunden. Dies sind in der Regel die Kurzschlussbalken, die an den Steuerleitungen angebracht sind. Im Unterschied dazu sind bei der vorliegenden Erfindung die Pads zur Erzeugung eines Textbilds über die Eingänge der Treiberschaltung mit der Treiberschaltung verbunden. Die Zahl der Verbindungen der Testkontaktflächen zu den Eingängen der Treiberschaltung ist im Vergleich zu der Zahl der Ausgänge der Treiberschaltung, die mit den Steuerleitungen verbunden sind, reduziert.

Auf Grund dessen ist es möglich, die für den Testvorgang verwendeten Kontaktflächen so zu gestalten, dass die Pads 105b mindestens eine Ausdehnung von 100 µm, bevorzugt von mindestens 0.5 mm, besonders bevorzugt von mindestens 2 mm haben. Unter Ausdehnung ist dabei die Abmessung in der Richtung zu verstehen, in der sich der kleinste Wert für die Abmessung ergibt. Demzufolge wäre bei einem rechteckigen Pad die Länge der kürzeren Seite als Ausdehnung anzusehen. Die oben genannte Ausdehnung der Kontaktflächen erlaubt eine sichere, schnelle und störungsunanfällige Kontaktierung.

Zur Erzeugung eines Testmusters, wie es in Bezug auf Fig. 4 näher erläutert wird, werden die Test-Pads 105b über die Zuleitungen 105a gemäß einer ersten Ausführungsform mit den Zuleitungen 104a verbunden. Die Zuleitungen 104a werden für die Pads 104b des regulären Betriebs verwendet. Über diese Verbindungen können ein oder mehrere Test-Pads mit den Eingängen der Treiberschaltungen 102x und/oder 102y verbunden sein. Darüber hinaus ist es möglich, dass ein Test-Pad mit mehreren Zuleitungen 104a für die normale Bilderzeugung über Schaltelemente oder Bauelemente (zum Beispiel Dioden, Transistoren oder anderes) verbunden ist. Ein Beispiel für eine solche Verbindung ist in Figur 1c mit dem Schalt- bzw. Bauelement 120 dargestellt. Eine andere Möglichkeit mehrere Zuleitungen mit einem Test-Pad zu verbinden ist eine Verbindungsstruktur, die für den normalen Betrieb entfernt wird. Das heißt, die Struktur wird z.B. bei der Glastrennung oder durch Ätzprozesse abgetrennt.

Die vorliegende Erfindung bezieht sich demnach auch auf optoelektronische Geräte zum Beispiel in Form von Displays, die für ein Testverfahren mit erfindungsgemäßen ersten und zweiten Anordnungen von Kontaktflächen ausgestattet sind, mit denen das erfindungsgemäße Testverfahren durchführt wird und bei denen zumindest Teile der Test-Anordnung von Kontaktflächen nach dem Testverfahren abgetrennt wird.

Da für ein Testverfahren keine beliebigen Muster auf dem Display erzeugt werden müssen, ist es nicht zwingend erforderlich, dass alle Eingänge 110 der Treiberschaltung 102x während des Tests ansteuerbar sind. Es kann jedoch von Vorteil sein, wenn zumindest alle Eingänge auf einem bestimmten Potential gehalten werden, um ein Floaten der Eingänge zu vermeiden. Für die vorliegende Erfindung können Test-Pads 105b mittels der Zuleitungen 105 a der Testkontaktflächen auch mit Betriebs-Pads 104b verbunden sein, ohne hierdurch von dem erfinderischen Gedanken abzuweichen.

Die Anschlüsse einer Treiberschaltung 102x gemäß einer Ausführungsform der vorliegenden Erfindung sind in Fig. 1b dargestellt. Die Steuerleitungen 103x für die Pixelmatrix 101 (in Fig. 1b nicht dargestellt) sind mit den Ausgängen der Treiberschaltung 102x verbunden. Die Zuleitungen 104a bzw. 105a sind mit den Eingängen der Treiberschaltung verbunden.

Dabei ist gemäß der vorliegenden Erfindung der Term "Ausgang" der Treiberschaltung so zu verstehen, dass die Ausgänge mit den Steuerleitungen, die für die Besteuerung der einzelnen Bildpunkte verwendet werden, verbunden sind. Als ein Eingang der Treiberschaltung ist ein Anschluss zu verstehen, über den die Treiberschaltungen mit externen Signalen versorgt wird. Dabei werden diese externen Signale in der Treiberschaltung modifiziert, um dann die an den Ausgängen angeschlossenen Steuerleitungen 103x mit Signalen für die Bildelemente zu versorgen.

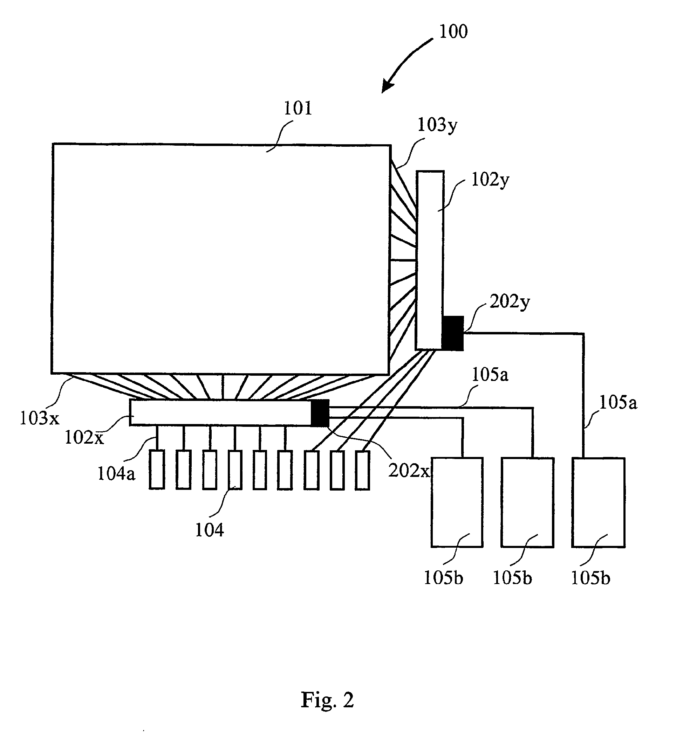

In Fig. 2 ist eine schematische Darstellung einer weiteren Ausführungsform eines Anzeigeelementes 100 zu sehen. Komponenten, die ähnlich oder analog zu der in Fig. 1a dargestellten Ausführungsform sind, tragen dieselben Bezugszeichen und sind im folgenden nicht näher erläutert. Im Unterschied zu Fig. 1a sind die Test-Kontaktflächen (105a + 105b) in der hier dargestellten Ausführungsform über Test-Treiberschaltungen 202x bzw. 202y mit den Treiberschaltungen 102x bzw. 102y verbunden.

Dabei dienen die Test-Treiberschaltungen 202x und 202y dazu, die von den Test-Kontaktflächen (105a und 105b) erhaltenen Signale in Signale für die Treiberschaltungen 102x und 102y umzusetzen. Die Treiberschaltungen 102 können diese umgesetzten Signale anschließend für die Mustererzeugung weiterverarbeiten und mittels der Steuerleitungen 103 den Pixeln zuführen.

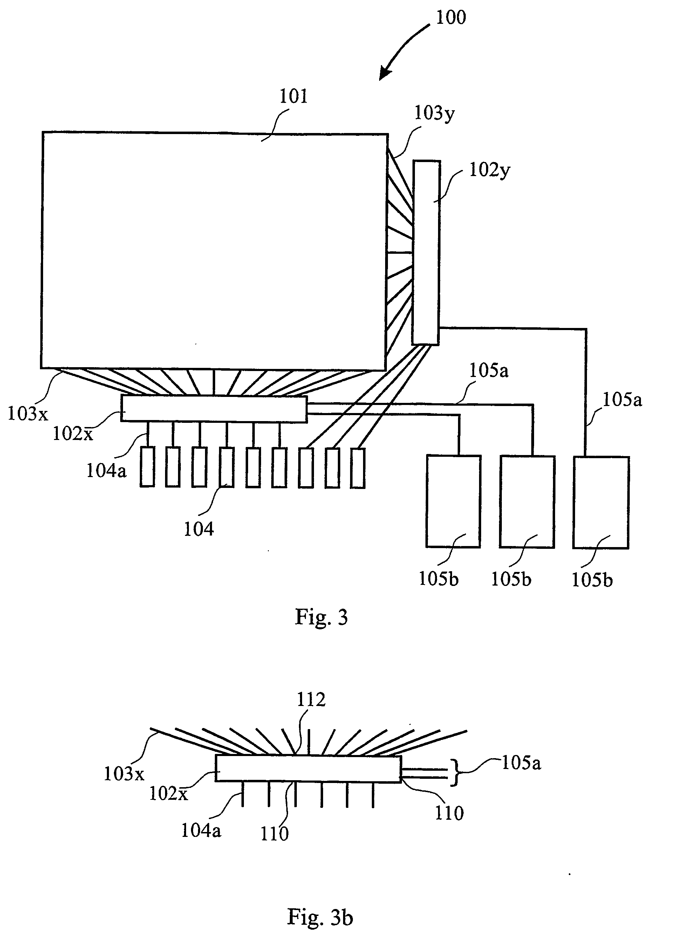

Für die Test-Treiberschaltungen 202 sind mehrere Realisierungsformen möglich. Zum einen ist eine Ausführungsform ähnlich zu Figur 3 realisierbar. Die Test-Treiberschaltung stellt dabei Eingänge für die Test-Kontaktflächen zur Verfügung und leitet die Signale an entsprechende Kontakte der Treiberschaltungen 102 weiter.

Zum anderen ist auch die folgende Ausführungsform möglich. Bei dieser Ausführungsform ist in der Test-Treiberschaltung 202 ein Speicher integriert. In dem Speicher sind ein oder mehrere Testmuster gespeichert. Über externe Signale, die über die Test-Kontaktflächen 105 zur Verfügung gestellt werden, wird die Erzeugung eines Testmusters gestartet oder gestoppt. Im Falle mehrerer gespeicherter Testmuster wird zusätzlich durch das externe Signal eines der Muster ausgewählt. Die Test-Treiberschaltung überträgt die für das Testmuster notwendigen Signale an die Treiberschaltungen 102. Auf Grund dieser Signale wird das Testmuster erzeugt. Gemäß dieser Ausführungsform ist es möglich, die Zahl der für ein Testverfahrens notwendigen Kontaktflächen bzw. Pads weiter zu reduzieren. Falls die Erzeugung des Testmusters lediglich gestartet oder gestoppt werden muss, kann die Zahl der Test-Kontaktflächen bevorzugt auf die Pads für die Spannungsversorgungen und ein Steuer-Pad reduziert werden.

Gemäß einer weiteren Ausführungsform kann die Test-Treiberschaltung 202 die Funktion eines Multiplexers übernehmen. Indem die Signale zum Beispiel zeitlich gemultiplext werden, wird es möglich eine Vielzahl von Signale über eine geringe Anzahl von Test-Pads 105b zur Verfügung zustellen. Der hierfür notwendige Zwischenspeicher oder eventuelle Timer-Bausteine sind bei dieser Ausführungsform ebenfalls auf dem Chip einer der Treiberschaltungen integriert.

Gemäß der in Fig. 3 dargestellten Ausführungsform wird die Test-Kontaktflächen 105 direkt mit Eingängen der Treiberschaltung bzw. der Treiberschaltungen verbunden. Hierfür können entweder Eingänge für die Erzeugung von Testmustern bei dem Layout der Treiberschaltung vorgesehen werden oder es kann eine Test-Treiberschaltungen 202, wie sie in Bezug auf Fig. 2 vorgestellt wurde derart in die Treiberschaltung 102 integrierten sein, dass von einer einzigen Treiberschaltung 102 gesprochen werden muss. Vorteilhaft ist unter anderem für diese Ausführungsform, wenn die Treiberschaltung Eingänge für die Erzeugung eines Testmusters zur Verfügung stellt und diese Eingänge mit Test-Kontaktflächen verbunden sind.

Analog zu Fig. 1b können auch in Fig. 3b Eingänge 110 und Ausgänge 112 der Treiberschaltung 102 unterschieden werden.

Eine mögliche Realisierungsform eines Testmusters, wie es mit der vorliegenden Erfindung erzeugt werden kann, ist in Fig. 4 dargestellt.

In Fig. 4 sind die einzelnen Bildpunkte, d. h. die Pixel, als Kästchen dargestellt. Die Buchstaben in den Kästchen symbolisieren ein Potential auf das die Elektroden der Bildpunkte bei der Erzeugung eines Testmusters aufgeladen werden. Beispielsweise können für zwei Spannungen V1 = -7V und V2 = +6V unterschiedliche Zuordnungen der Spannungen zu den Bildpunkten realisiert werden. Welches der Pixel A bis D dabei welchem Potential zugeordnet wird ist innerhalb des Setups für den Test festgelegt. Zum Beispiel kann A=B=C=V1 und D=V2 gewählt werden. Dadurch wird erreicht, dass alle Bildpunkte, die zu einem Pixel D mit dem Potenzial V2 benachbarte sind, auf dem Potenzial V1 liegen. Durch eine andere Wahl der Zuordnungen, wie zum Beispiel A=C=V1 und B=D=V2, können zum Beispiel horizontale Streifen erzeugt werden.

Wie in Fig. 4 erkennbar ist, kann mit einem solchen Testmuster eine Periodizität in vertikaler, horizontaler und diagonaler Richtung erzeugt werden. Im Gegensatz zu obigen Beispielen ist es ferner möglich mehr als zwei unterschiedliche Potentiale zuzulassen. Jeder Bildpunkt kann somit jeweils symmetrisch in der Horizontalen, der Vertikalen bzw. den Diagonalen von beliebigen Spannung umgeben werden. Auf der Elektrode des Bildelements selbst kann ein weiteres Potential erzeugt werden.

Durch eine solche Wahl eines Testmusters, das als nicht einschränkendes Beispiel verstanden werden soll, können auf Grund der periodischen Anordnung der Potentiale der Elektroden der Bildelemente alle Freiheitsgrade, die für ein Testmusters ausreichend sind, ausgeschöpft werden.

Für die Erzeugung noch komplexerer Testmuster kann ein Muster entsprechend den Buchstaben A bis H erzeugt werden. Dadurch kann ausgehend von einem Bildelemente jedem benachbarten Pixel ein anderer Potentialwert zugewiesenen werden.

Nichtsdestotrotz ist die Ansteuerung für ein solches periodisches Muster weniger komplex als die Erzeugung eines beliebigen Bildes. Daher ist es möglich die Anzahl der Test-Kontaktflächen im Vergleich zu der Anzahl der Betriebs-Kontaktflächen zu reduzieren. Dies ermöglicht eine Vergrößerung der im Rahmen eines Testverfahrens verwendeten Kontaktflächen. Gemäß der vorliegenden Erfindung führt dies zu einem verbesserten Testverfahren, da Fehler bei der Kontaktierung reduziert werden können. Darüber hinaus kann die Mechanik zur Kontaktierung des zu testenden Displays auf Geschwindigkeit ausgelegt werden. Durch diese Optimierung kann das Testverfahrens zusätzlich beschleunigt werden. Dadurch wird der Durchsatz des zu prüfenden Stückguts erhöht.

Die oben beschriebenen Ausführungsformen der vorliegenden Erfindung können bei einem erfindungsgemäßen Testverfahren, wie es im folgenden beschrieben wird, vorteilhaft eingesetzt werden. Um die Herstellungskosten zu reduzieren, ist es notwendig, zum Beispiel ein LCD-Display bereits während der Herstellung einer Fehlerprüfung zu unterziehen. Bei einer Fehlerprüfung werden die Elektroden der einzelnen Bildelemente und/oder die Schaltelemente zur Steuerung der Bildelemente getestet. Hierzu kann ein Strahl geladener Teilchen (Partikelstrahl), wie zum Beispiel ein Elektronen oder Ionenstrahl, oder ein Laserstrahl verwendet werden. Im Folgenden wird unter Korpuskularstrahl sowohl ein Laserstrahl, bei dem die Korpuskeln Photonen sind, als auch ein Partikelstrahl, bei dem die Korpuskel Ionen, Atome, Elektronen sind oder andere Partikel sind, verstanden.

Im Folgenden wird das Testverfahren anhand eines Elektronenstrahls beschrieben, ohne dass sich die Erfindung darauf beschränkt. Eine mögliche Testmethode besteht darin über die Zuleitungen die Elektroden der Bildelemente auf ein Potential aufzuladen. Dieses Potential bzw. dessen zeitliche Veränderung kann mit dem Korpuskularstrahl gemessen werden. Dabei können sowohl Defekte wie Kürzschlüsse oder fehlende Kontakte erkannt werden, als auch parasitäre Elemente und deren Größe bestimmt werden.

In einer anderen Methode werden die Elektroden der Bildelemente über einen Korpuskularstrahl aufgeladen und die sich dabei ergebenden Potentiale ebenfalls mit einem Korpuskularstrahl gemessen. Dabei bestimmt die Ansteuerung der Zuleitungen die Anfangs- und Randbedingungen.

In einer weiteren Methode werden die Elektroden der Bildelemente über einen Korpuskularstrahl aufgeladen und der dadurch in den Zuleitungen hervorgerufene Strom gemessen. Je nach Funktionsweise der Treiberschaltung kann es notwendig sein, die Treiberschaltung so auszulegen, dass eine solche Messung des Stroms an von außen zugänglichen Kontakten an der Treiberschaltung möglich wird.

Bei den meisten dieser Methoden ist es notwendig die Zuleitungen der Bildelemente entweder mit Signalen zu versorgen oder Signale an den Zuleitungen zu messen. Daher müssen für das Testverfahren die Pads der Anzeigeelemente mit einer externen Steuerung oder externen Messinstrumenten verbunden werden. Diese Kontaktierung kann durch die Vorrichtung der vorliegende Erfindung verbessert werden.

Bei dem Testverfahren, wird das zu testende Display zunächst in eine Kammer eingebracht und unter dem Elektronenstrahl platziert. Zur Verwendung des Elektronenstrahls muss die Kammer bis zu einem Druck von unter 10⁻⁴ mbar evakuiert werden. Ferner wird ein Kontaktierblock mit den erfindungsgemäßen Test-Kontaktflächen verbunden. Der Kontaktierblock ist eine Mechanik mit der eine Testanlage den elektrischen Kontakt zu den Kontaktflächen des Displays im allgemeinen herstellt. Es erfolgt eine Übertragung von Signalen auf die Kontaktflächen. In Abhängigkeit von den Signalen werden die Elektroden bzw. einzelnen Elektroden der Bildelemente auf definierte Potentiale aufgeladen. Hierdurch wird ein Testmuster erzeugt. Indem der Elektronenstrahl durch Deflektoren unter anderem abgelenkt wird, testet die Steuerung der Testanlage die Potentiale einzelner Elektroden. Da für große Displays keine ausreichende Ablenkung des Elektronenstrahls realisiert werden kann, wird zunächst ein Bereich des Displays getestet und das Display anschließend mittels einer Verschiebeeinheit verschoben. Für eine verlässliche Prüfung ist es wichtig, dass die Kontaktierung zu den Pads kontinuierlich erhalten bleibt oder zuverlässig und schnell wieder hergestellt werden kann. Dies ist gemäß der vorliegenden Erfindung durch die Testkontaktflächen möglich. Nach der Verschiebung wird ein weiterer Bereich getestet. Das Wechselspiel aus Verschiebung des Anzeigeelementes und Testen eines Bereiches kann fortgesetzt werden bis das gesamte Display getestet ist oder alle auf dem Substrat vorhandenen Displays getestet sind..

Um einen hohen Durchsatz zu erzielen, ist für das oben beschriebene Testverfahren unter anderem die Testgeschwindigkeit wichtig. Darüber hinaus muss die Messung sehr zuverlässig sein, da bereits ca. 0.1 Promille defekter Bildelemente eine Verwendung des Displays verhindern. Bei einer frühzeitigen Erkennung von Fehlern während des Herstellungsprozesses kann eine Fehlerkorrektur zum Beispiel durch einen Ionenstrahl oder Laserstrahl stattfinden.

Da bereits kleine Leckströme auf Grund parasitärer Elemente zu erkennbaren Bildfehlern führen können, ist es weiterhin zu bevorzugen, die Testanlage mit empfindlichen Testverfahren auszustatten. Daher müssen bei der Kontaktierung elektromagnetische Störfelder, die den Elektronenstrahl oder die Messung von Sekundärelektronen und rückgestreuten Elektronen stören können, weitgehend vermieden werden.

Aus den oben genannten Gründen sind für das beschriebene erfindungsgemäße Testverfahren die Vorrichtungen der vorliegende Erfindung vorteilhaft, da durch die Testkontaktflächen die Kontaktierung des Displays innerhalb der Testanlage vereinfacht wird. Demzufolge ist es möglich eine Kontaktierung effizient zu verwirklichen. Die Kontaktierung genügt dabei den oben genannten Randbedingungen.

Im allgemeinen können, losgelöst von einzelnen Ausführungsformen, folgende bevorzugte erfindungsgemäße Aspekte für bevorzugte Lösungen der erfindungsgemäßen Aufgabe eingesetzt werden.

Es ist zu bevorzugen wenn die zweite Anordnung von Kontaktflächen über die erste Anordnung von Kontaktflächen mit der Treiberschaltung verbunden ist. Dabei können die Kontaktflächen für die Erzeugung des Testmusters mit mehreren Kontaktflächen für den regulären Betrieb verbunden sein. Darüber hinaus kann die Anzahl der Testkontaktflächen im Vergleich zu der Anzahl der regulären Betriebskontaktflächen besonders bevorzugt dadurch reduziert werden, dass nicht alle mit der Treiberschaltung verbundenen Betriebskontaktflächen mit einer Testkontaktfläche verbunden sind.

Weiterhin kann es vorteilhaft sein, wenn die zweite Anordnung von Kontaktflächen über eine Testelektronik mit der Treiberschaltung verbunden ist. Dabei ist es insbesondere bevorzugt, wenn die Testelektronik einen Speicher enthält, aus dem das zu erzeugende Testmuster gelesen wird. Dieses Testmuster kann der Treiberschaltung zur Verfügung gestellt werden.

Außerdem kann es vorzuziehen sein, wenn die zweite Anordnung von Kontaktflächen direkt mit der Treiberschaltung verbunden ist. Dabei ist es besonders vorteilhaft, wenn die Treiberschaltung dergestalt ist, dass sie Schaltkreise zur Verarbeitung der Signale von den Testkontaktflächen für die Testmuster enthält.

Die soeben genannten Aspekte dienen dazu, den Testvorgang weiter zu vereinfachen, indem eine Trennung zwischen Kontaktflächen für den Testvorgang und für die reguläre Bilderzeugung vorgenommen wird. Darüber hinaus ist es auf Grund dieser bevorzugten Aspekte möglich, die Zahl der Kontaktflächen für den Test zu reduzieren und somit die Option auf vergrößerte Kontaktflächen für den Testvorgang zu bieten.

Gemäß einem bevorzugten Aspekt ist die Anzahl von zweiten Pads der zweiten Anordnung von Kontaktflächen maximal 90 % der Anzahl von ersten Pads der ersten Anordnung von Kontaktflächen. Bevorzugt ist die Anzahl der zweiten Pads maximal 50 %, besonders bevorzugt maximal 20 % der Anzahl der ersten Kontaktflächen. Dadurch wird es möglich und ist insbesondere von Vorteil, die zweiten Pads der zweiten Anordnung von Kontaktflächen mit mindestens einer Ausdehnung von 100 µm, bevorzugt einer Ausdehnung von 0.5 mm, besonders bevorzugt einer Ausdehnung von 2 mm zur Verfügung zu stellen.

Enthält bei einer bevorzugten Ausführungsform der vorliegenden Erfindung die Test-Treiberschaltung einen Speicher kann es vorteilhaft sein, wenn die Anzahl der zweiten Pads der zweiten Anordnung von Kontaktflächen, die zur Signalübertragung genutzt werden, eins beträgt.

Im allgemeinen können, losgelöst von einzelnen Ausführungsformen, folgende bevorzugte erfindungsgemäße Aspekte beim Testen eines optoelektronischen Gerätes der vorliegenden Erfindung vorteilhaft eingesetzt werden.

Beim Testen eines optoelektronischen Gerätes gemäß der vorliegende Erfindung ist es zu bevorzugen wenn die Eingangssignale ein periodisches Testmuster erzeugen. Besonders bevorzugt sind hierbei in vertikaler, horizontaler und diagonaler Richtung periodische Testmuster.

Darüber hinaus bringt die vorliegende Erfindung insbesondere Vorteile, wenn beim Testen ein Vakuum in der Umgebung des zu testenden optoelektronischen Gerätes verwendet wird oder wenn das Testverfahren folgende Schritte beinhaltet: Testen der Bildelement in einem Bereich der Matrix von Bildelementen oder aller Bildelemente einer kleineren Matrix; Verschieben des optoelektronischen Gerätes und Testen von Bildelementen in einem weiteren bereich der Matrix von Bildelementen oder einer weiteren kleinen Matrix.

## Patentansprüche

1. Ansteuerelektronik für die Ansteuerung eines optoelektronischen Gerätes mit einer Matrix von Bildelementen, mit:
einer Treiberschaltung (102x), wobei
die Treiberschaltung Eingänge (110) und Ausgänge (112) aufweist;
einer ersten Anordnung von Kontaktflächen (104), die mit den Eingängen der Treiberschaltung (102x) verbunden sind; und
einer zweiten Anordnung von Kontaktflächen (105), die mit den Eingängen der Treiberschaltung (102x) verbunden sind,
wobei die Kontaktflächen (105) der zweiten Anordnung von Kontaktflächen größer sind als die Kontaktflächen (104) der ersten Anordnung von Kontaktflächen.

2. Ansteuerelektronik gemäß einem der vorhergehenden Ansprüchen, wobei:
die Anzahl der Eingänge der Treiberschaltung (102x), mittels derer die Treiberschaltung mit der zweiten Anordnung von Kontaktflächen (105) verbunden ist, maximal 5 % der Anzahl der Ausgänge der Treiberschaltung beträgt, mittels derer die Treiberschaltung mit den Steuerleitungen (103x) der Matrix von Bildelementen (101) verbunden ist.

3. Ansteuerelektronik gemäß einem der vorhergehenden Ansprüche, wobei:
die erste Anordnung von Kontaktflächen (104) für die Bilderzeugung während des normalen Betriebs dient; und
die zweite Anordnung von Kontaktflächen (105) für die Mustererzeugung während des Testbetriebs dient.

4. Ansteuerelektronik gemäß einem der vorhergehenden Ansprüche, wobei:
die zweite Anordnung von Kontaktflächen (105) über die erste Anordnung von Kontaktflächen (104) mit der Treiberschaltung (102x) verbunden ist.

5. Ansteuerelektronik gemäß Anspruch 4 wobei:
die zweite Anordnung von Kontaktflächen (105) über die erste Anordnung von Kontaktflächen (104) mittels Schaltelementen oder Bauelementen mit der Treiberschaltung (102x) verbunden ist.

6. Ansteuerelektronik gemäß Anspruch 4 wobei:
die zweite Anordnung von Kontaktflächen (105) über die erste Anordnung von Kontaktflächen (104) direkt mit der Treiberschaltung (102x) verbunden ist.

7. Ansteuerelektronik gemäß einem der Ansprüche 1 bis 3, wobei:
die zweite Anordnung von Kontaktflächen (105) über eine Testelektronik (202x) mit der Treiberschaltung (102x) verbunden ist.

8. Ansteuerelektronik gemäß einem der Ansprüche 1 bis 3, wobei:
die zweite Anordnung von Kontaktflächen (105) direkt mit der Treiberschaltung verbunden ist.

9. Ansteuerelektronik gemäß Anspruch 8, wobei:
in der Treiberschaltung Testschaltkreise integriert sind.

10. Ansteuerelektronik gemäß einem der vorhergehenden Ansprüche, wobei:
die Anzahl von zweiten Pads (105b) der zweiten Anordnung von Kontaktflächen (105) maximal 90 % der Anzahl von ersten Pads (104b) der ersten Anordnung von Kontaktflächen (104) beträgt, bevorzugt maximal 50 %, besonders bevorzugt maximal 20 % beträgt.

11. Ansteuerelektronik gemäß einem der vorhergehenden Ansprüche, wobei:
die zweiten Pads (105b) der zweiten Anordnung von Kontaktflächen größer sind als die ersten Pads (104b) der ersten Anordnung von Kontaktflächen.

12. Ansteuerelektronik gemäß einem der vorhergehenden Ansprüche, wobei:
die zweiten Pads (105b) der zweiten Anordnung von Kontaktflächen mindestens eine Ausdehnung von 100 µm, bevorzugt eine Ausdehnung von 0.5 mm, besonders bevorzugt eine Ausdehnung von 2 mm haben.

13. Optoelektronisches Gerät mit
einer Matrix von Bildelementen (101); und
einer Ansteuerelektronik gemäß einem der Ansprüche 1 bis 12.

14. Optoelektronisches Gerät gemäß Anspruch 13, wobei zumindest Teile der zweiten Anordnung von Kontaktflächen abgetrennt sind.

15. Verfahren zum Testen eines optoelektronischen Gerätes mit den Schritten:
a) ein Kontakt zwischen einer externen Steuerung und einer Anordnung von Testkontaktflächen, die größer sind als Betriebskontaktflächen, wird hergestellt;
b) über die Anordnung von Testkontaktflächen wird ein Eingang einer Treiberschaltung mit Eingangssignalen versorgt, um ein Testmuster auf einer Matrix von Bildelementen zu erzeugen; und
c) die Bildelemente der Matrix von Bildelementen werden getestet.

16. Verfahren zum Testen gemäß Anspruch 15, wobei
die Eingangssignale ein periodisches Testmuster erzeugen.

17. Verfahren zum Testen gemäß einem der Ansprüche 15 bis.16, wobei
die Eingangssignale ein vertikal, horizontal oder diagonal periodisches Testmuster erzeugen.

18. Verfahren zum Testen gemäß einem der Ansprüche 15 bis 17, wobei
die Bildelemente mit einem Strahl geladener Teilchen oder Laserstrahlung getestet werden.

19. Verfahren zum Testen gemäß einem der Ansprüche 15 bis 18, das den weiteren Schritt beinhaltet:
ein Vakuum wird in der Umgebung des zu testenden optoelektronischen Gerätes hergestellt.

20. Verfahren zum Testen gemäß einem der Ansprüche 15 bis 19, wobei Schritt c) folgende Schritte enthält:
c1) die Bildelemente in einem Bereich der Matrix von Bildelementen werden getestet;
c2) das optoelektronische Gerät wird verschoben; und
c3) die Bildelemente in einem weiteren Bereich der Matrix von Bildelementen werden getestet;

21. Verfahren zum Herstellen einer Ansteuerelektronik eines optoelektronischen Gerätes mit einer Matrix von Bildelementen mit den Schritten:
a) eine Treiberschaltung wird zur Verfügung gestellt;
b) Steuerleitungen der Matrix von Bildelementen werden mit Ausgängen der Treiberschaltung verbunden;
c) eine erste Anordnung von Kontaktflächen wird zur Verfügung gestellt;
d) die erste Anordnung von Kontaktflächen wird mit Eingängen der Treiberschaltung verbunden;
e) eine zweite Anordnung von Kontaktflächen wird zur Verfügung gestellt, deren Kontaktflächen größer sind als die Kontaktflächen der ersten Anordnung von Kontaktflächen; und
f) die zweite Anordnung von Kontaktflächen wird mit Eingängen der Treiberschaltung verbunden.

## Claims

1. A drive electronics for driving an optoelectronic device with a matrix of picture elements, having
a drive circuit (102x), wherein
the drive circuit has input terminals (110) and output terminals (112);
a first arrangement of contact areas (104) connected with the input terminals of the drive circuit (102x); and
a second arrangement of contact areas (105) connected with the input terminals of the drive circuit (102x),
wherein the contact areas (105) of the second arrangement of contact areas are larger than the contact areas (104) of the first arrangement of contact areas.

2. The drive electronics according to any of the preceding claims, wherein:
the number of input terminals of the drive circuit (102x) by which the drive circuit is connected with the second arrangement of contact areas (105) is at most 5% of the number of output terminals of the drive circuit by which the drive circuit is connected with the control lines (103x) of the matrix of picture elements.

3. The drive electronics according to any of the preceding claims, wherein:
the first arrangement of contact areas (104) serves for picture generation during normal operation; and
the second arrangement of contact areas (105) serves for pattern generation during test mode.

4. The drive electronics according to any of the preceding claims, wherein:
the second arrangement of contact areas (105) is connected with the drive circuit (102x) via the first arrangement of contact areas (104).

5. The drive electronics according to claim 5, wherein:
the second arrangement of contact areas (105) is connected with the drive circuit (102x) via the first arrangement of contact areas (104) by means of switching elements or components.

6. The drive electronics according to claim 5, wherein:
the second arrangement of contact areas (105) is directly connected with the drive circuit (102x) via the first arrangement of contact areas (104).

7. The drive electronics according to any of claims 1 to 3, wherein:
the second arrangement of contact areas (105) is connected with the drive circuit (102x) via a test electronics (202x).

8. The drive electronics according to any of claims 1 to 3, wherein:
the second arrangement of contact areas (105) is directly connected with the drive circuit.

9. The drive electronics according to claim 8, wherein:
test circuits are integrated into the drive circuit.

10. The drive electronics according to any of the preceding claims, wherein:
the number of second pads (105b) of the second arrangement of contact areas (105) is at most 90% of the number of first pads (104b) of the first arrangement of contact areas (104), preferably at most 50%, more preferably at most 20%.

11. The drive electronics according to any of the preceding claims, wherein:
the second pads (105b) of the second arrangement of contact areas are larger than the first pads (104b) of the first arrangement of contact areas.

12. The drive electronics according to any of the preceding claims, wherein:
the second pads (105b) of the second arrangement of contact areas have a dimension of at least 100 µm, preferably a dimension of 0.5 mm, and more preferably a dimension of 2 mm.

13. An optoelectronic device having
a matrix of picture elements (101); and
a drive electronics according to any of claims 1 to 12.

14. Optoelectronic device according to claim 13, wherein at least part of the second arrangement of contact areas are removed.

15. A method for testing an optoelectronic device, comprising the steps of:
a) contact is made between an external control and an arrangement of test contact areas being larger tan normal operation contact areas;
b) an input terminal of a drive circuit is provided with input signals via the arrangement of test contact areas to generate a test pattern on a matrix of picture elements; and
c) the picture elements of the matrix of picture elements are tested.

16. The testing method according to claim 15, wherein
the input signals generate a periodic test pattern.

17. The testing method according to claim 15 or 16, wherein
the input signals generate a vertically, horizontally or diagonally periodic test pattern.

18. The testing method according to any of claims 15 to 17, wherein:
the picture elements are tested with a beam of charged particles or laser radiation.

19. The testing method according to any of claims 15 to 18, comprising the further step of:
a vacuum is generated in the vicinity of the optoelectronic device to be tested.

20. The testing method according to any of claims 15 to 19, wherein step c) comprises the following steps:
c1) the picture elements in a portion of the matrix of picture elements are tested;
c2) the optoelectronic device is shifted; and
c3) the picture elements in a further portion of the matrix of picture elements are tested.

21. A method for manufacturing a drive electronics of an optoelectronic device having a matrix of picture elements, comprising the steps:
a) a drive circuit is provided;
b) control lines of the matrix of picture elements are connected with output terminals of the drive circuit;
c) a first arrangement of contact areas is provided;
d) the first arrangement of contact areas is connected with input terminals of the drive circuit;
e) a second arrangement of contact areas with contact areas being larger than contact areas of the first arrangement of contact areas is provided; and
f) the second arrangement of contact areas is connected with input terminals of the drive circuit.

## Revendications

1. Dispositif de commande électronique pour la commande d'un appareil optoélectronique avec une matrice d'éléments d'image, avec :
un circuit d'attaque (102x),
le dispositif d'attaque présentant des entrées (110) et des sorties (112);
un premier ensemble de surfaces de contact (104), lesquelles sont en liaison avec les entrées du dispositif d'attaque (102x); et
un deuxième ensemble de surfaces de contact (105), lesquelles sont en liaison avec les entrées du circuit d'attaque (102x),
les surfaces de contact (105) du deuxième ensemble de surfaces de contact étant plus grandes que les surfaces de contact (104) du premier ensemble de surfaces de contact.

2. Dispositif de commande électronique selon la revendication précédente, dans lequel :
le nombre d'entrées du circuit d'attaque (102x) grâce auxquelles le circuit d'attaque est en liaison avec le deuxième ensemble de surfaces de contact (105) représentant au maximum 5% du nombre de sorties du circuit d'attaque, grâce auxquelles le circuit d'attaque est en liaison avec les lignes pilote (103x) de la matrice d'éléments d'image (101).

3. Dispositif de commande électronique selon l'une quelconque des revendications précédentes, dans lequel :
le premier ensemble de surfaces de contact (104) sert à la formation d'images pendant le fonctionnement normal ; et
le deuxième ensemble de surfaces de contact (105) servant à la formation de motifs pendant le fonctionnement de test.

4. Dispositif de commande électronique selon l'une quelconque des revendications précédentes, dans lequel
le deuxième ensemble de surfaces de contact (105) est en liaison, via le premier ensemble de surfaces de contact (104), avec le circuit d'attaque (102x).

5. Dispositif de commande électronique selon la revendication 4, dans lequel :
le deuxième ensemble de surfaces de contact (105) est en liaison avec le circuit d'attaque (102x) via le premier ensemble de surfaces de contact (104), à l'aide d'éléments de commutation ou de composants.

6. Dispositif de commande électronique selon la revendication 4, dans lequel
le deuxième ensemble de surfaces de contact (105) est directement en liaison, via le premier ensemble de surfaces de contact (104), avec le circuit d'attaque (102x).

7. Dispositif de commande électronique selon l'une des revendications 1 à 3, dans lequel
le deuxième ensemble de surfaces de contact (105) est en liaison, via un dispositif électronique de test (202x), avec le circuit d'attaque (102x).

8. Dispositif de commande électronique selon l'une des revendications 1 à 3, dans lequel :
le deuxième ensemble de surfaces de contact (105) est directement en liaison avec le circuit d'attaque.

9. Dispositif de commande électronique selon la revendication 8, dans lequel :
des circuits de commutation de test sont intégrés dans le circuit d'attaque.

10. Dispositif de commande électronique selon l'une quelconque des revendications précédentes, dans lequel :
le nombre de deuxièmes pastilles (105b) du deuxième ensemble de surfaces de contact (105) représente au maximum 90% du nombre de premières pastilles (104b) du premier ensemble de surfaces de contact (104), et représente de préférence un maximum de 50%, et de manière particulièrement préférée, un maximum de 20%.

11. Dispositif de commande électronique selon l'une des revendications précédentes, dans lequel :
les deuxièmes pastilles (105b) du deuxième ensemble de surfaces de contact sont plus grandes que les premières pastilles (104b) du premier ensemble de surfaces de contact.

12. Dispositif de commande électronique selon l'une quelconque des revendications précédentes, dans lequel :
les deuxièmes pastilles (105b) du deuxième ensemble de surfaces de contact présentent un étalement de 100µm, de préférence un étalement de 0,5 mm, et de manière particulièrement préférée un étalement de 2 mm.

13. Appareil optoélectronique avec
une matrice d'éléments d'image (101) ; et
un dispositif électronique de commande selon l'une quelconque des revendications 1 à 12.

14. Appareil optoélectronique selon la revendication 13, dans lequel au moins des parties du deuxième ensemble de surfaces de contact sont séparées.

15. Procédé pour tester un appareil optoélectronique comprenant les étapes suivantes :
a) établissement d'un contact entre une commande externe et un ensemble de surfaces de contact de test, lesquelles sont plus grandes que des surfaces de contact de fonctionnement ;
b) alimentation d'une entrée d'un circuit d'attaque avec des signaux d'entrée via l'ensemble de surfaces de contact de test, afin de produire un motif de test sur une matrice d'éléments d'image ; et
c) test des éléments d'image d'éléments d'image.

16. Procédé de test selon la revendication 15 dans lequel
les signaux d'entrée génèrent un motif de test périodique.

17. Procédé de test selon l'une quelconque des revendications 15 à 16 dans lequel
les signaux d'entrée génèrent un motif de test périodique vertical, horizontal, ou diagonal.

18. Procédé de test selon l'une quelconque des revendications 15 à 17 dans lequel
les éléments d'image sont testés avec un faisceau de particules chargées ou un faisceau laser.

19. Procédé de test selon l'une quelconque des revendications 15 à 18, comprenant l'étape suivante :
établissement d'un vide dans l'environnement de l'appareil optoélectronique à tester.

20. Procédé de test selon l'une quelconque des revendications 15 à 19, dans lequel l'étape c) comprend les étapes suivantes :
c1) les éléments d'images dans une zone de la matrice d'éléments d'image sont testés ;
c2) l'appareil optoélectronique est déplacé ; et
c3) les éléments d'image dans une autre zone de la matrice d'éléments d'image sont testés.

21. Procédé de fabrication d'un dispositif de commande électronique d'un appareil optoélectronique avec une matrice d'éléments d'image comprenant les étapes suivantes :
a) un circuit d'attaque est mis à disposition;
b) des lignes pilote de la matrice d'éléments d'image sont reliées au circuit d'attaque ;
c) un premier ensemble de surfaces de contact est mis à disposition ;
d) le premier ensemble de surfaces de contact est relié aux entrées du circuit d'attaque ;
e) un deuxième ensemble de surfaces de contact est mis à disposition, dont les surfaces de contact sont plus grandes que les surfaces de contact du premier ensemble de surfaces de contact ; et
f) le deuxième ensemble de surfaces de contact est relié à des entrées du circuit d'attaque.
